# EUROPÄISCHE PATENTANMELDUNG

(11) **EP 0 878 416 A1**
(43) Veröffentlichungstag der Anmeldung: **18.11.1998**
(21) Anmeldenummer: 97108021.3
(22) Anmeldetag: 16.05.1997
(51) Int. Cl.: B65G 1/14, B65D 19/44

(54) **Gestell mit Stapelsäule**

(71) Anmelder: Jürgens, Walter, Dr. Ing., D-52072 Aachen (DE)
(72) Erfinder: Jürgens, Walter, Dr. Ing., D-52072 Aachen (DE)

(57) **Zusammenfassung**

Die Erfindung betrifft ein Stapelsäulengestell mit Klinkensäulen zum Transport von großflächigen Teilen, wobei die Grundsäule mit einem Käfig (3) versehen wird, der die Klinke und die Gestänge trägt.

## Beschreibung

Zum Transport Von großflächigen Teilen z. B. Seitenteilen, Dächern usw. Von Automobilen werden Gestelle mit Stapelsäulen verwendet. Diese Stapelsäulen haben Klinken (Klinkensäulen) auf denen die großflächigen Teile abgelegt werden.

Die Teile werden so getrennt, in der Regel automatisch übereinander gelagert, und entnommen. Die Klinken sind miteinander über Gestänge verbunden. Die untere Klinke hat eine vorgegebene Neigung. Die darüberliegende Klinke liegt im Schatten der Säulenflanken. Sobald das zu lagernde oder zu transportierende Teil auf die unterste Klinke gelegt wird, Klappt diese um ihren Drehpunkt in die waagerechte Position und nimmt die darüberliegende Klinke auf Grund der Gestängeverbindung mit und-schwenkt diese wieder in die Schrägstellung (ca. 45°) So gebt das von einer Klinke zur anderen Bei der Neigung der Klinke steht diese partiell vor der Säule, so daß das nächste zu lagernde Teil Auflage findet, aber durch die darüberliegende Klinke nicht behindert wird.

Es gibt verschiedene Systeme. Die einen arbeiten über Schwerkraft, die anderen mit Federrückstellung der Klinke. Alle haben den Nachteil, daß man für jeden neuen Verwendungsszweck wieder die Säulen erneuern muß. Das ist umständlich und teuer. Beim Ausrichten müssen die Säulen zudem aufwendig in die Senkrechte, daß heißt in den 90° Winkel zur Basisfläche des Gestells gebracht werden.

Der Erfinder bat es sich zur Aufgabe gemacht, diese gravierenden Nachteile zu eliminieren.

Er schlägt vor, die Klinken incl. Gestänge usw. in einen separaten Käfig zu montieren. Dieser Käfig kann sehr leicht ausgeführt sein, da er ja keine Schutzfunktion hat. Dieser Käfig wird in die Säule gehängt, geschraubt (also befestigt). Das bat den Vorteil, das die Basissäule als Schutz-und Stabilisatorsäule auch für weitere Verwendungszwecke gebraucht werden kann. Nur der Käfig mit den den Teilen angepaßten Klinkenabständen und der notwendigen Klinkengeometrie wird erneuert. Das ist auf längere Sicht wesentlich preisgünstiger und bat zudem den Vorteil der leichteren Montage. Denn die Säule kann geneigt stehen. Man braucht nur den Käfig senkrecht zur Basispalette in die Säule zu montieren.
(Es können natürlich , wenn die Teilegeometrie es erlaubt, die Klinken verwendet werden)

Zudem ist die Reparatur wesentlich einfacher. Der Käfig wird herausgeschwenkt oder genommen und man kann einfach die defekten Teile austauschen.

Die Lagerung der Klinken wird wesentlich vereinfacht, da sie nur eingelegt werden müssen. Auch bei der Wiederverwertung der Klinken usw. ist die Entnahme, also Demontage viel schneller. Wenn die Seitenteile des Käfigs aus Kunststoff bestehen, ist das Lagern der Klinken, wegen dem Schmiereffekt sogar besser, zudem ist eine gewisse Geräuschdämmung festzustellen. Die Schleifkante z. B. aus V2A kann mit dem Käfig direkt verbunden werden.

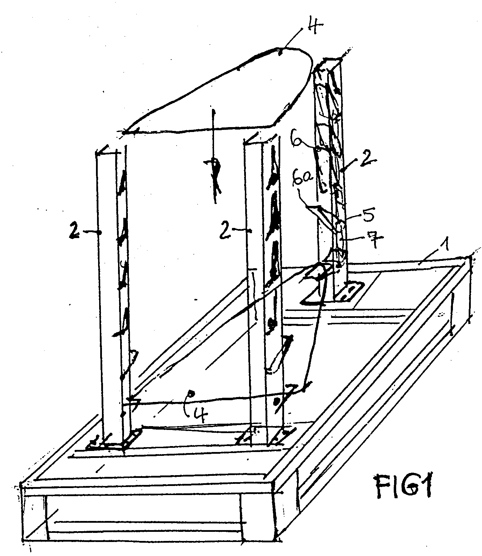

Fig. 1 zeigt perspektivisch ein Gestell mit Klinkensäulen und angedeutet ein eingelagertes Teil.

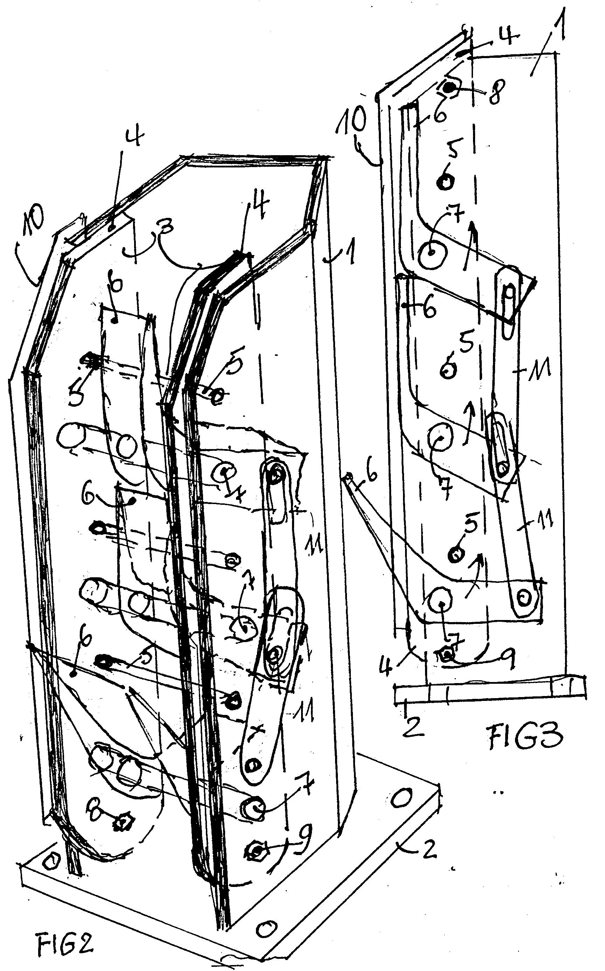

Fig. 2 zeigt perspektivisch eine solche Säule. Die Grundsäule, der Säulenkorpus (1) ist aus massivem Stahl, da er die Stabilität der Säule und den Schutz der Klinken gewährleisten muß. Sie hat einen Fuß (2), mit dem die Säule auf das Gestell geschraubt wird. Der Käfig (3) besteht aus den Seitenelementen (4), die über die Verbindungselemente (5), die gleichzeitig als Anschläge für die waagerechte Klinke dienen können, miteinander verbunden sind. In den Seitenelementen lagern die Klinken (6) mit Ihrer Achse (7). Der Käfig wird in die zur Basispalette geforderte senkrechte Lage gebracht und mit der Grundsäule (1) oben (8) und unten (9) verschraubt. Wenn die Schleifkanten (10), an der das zu lagernde Teil hinuntergleitet, mit dem Käfig verbunden ist, kann die Grundsäule geringfügig schiefstehen, daß beieinträchtigt nicht die Funktion.

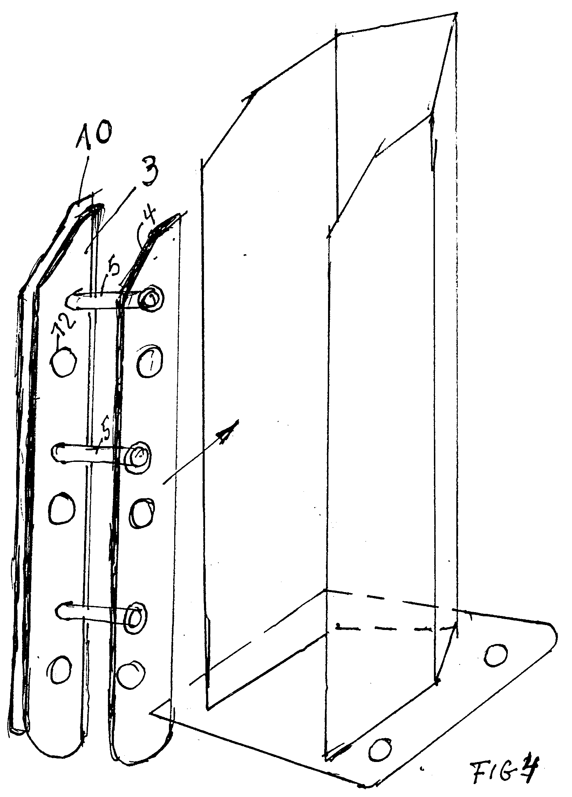

Fig. 3 zeigt die Seitenansicht einer solchen Säule.

Fig. 4 zeigt perspektivisch die Grundsäule, also den Säulenkorpus (1). Der Käfig (3) ist ohne Klinken (6), Achsen (7) und Gestänge (11). Der Käfig wird mit diesen Teilen insgesamt in die Grundsäule (1) eingeschoben und an richtiger Position verschraubt.

## Patentansprüche

1. Gestein mit Stapelsäulen, die als Klinkensäulen ausgebildet sind, dadurch gekennzeichnet, daß sich in einer Stahlsäule ein Einsatz mit Klinken, die über Gestänge miteinander verbunden sind, befindet, der als selbstständige Einheit, als Käfig ausgebildet ist (2 Seitenelemente in denen die Klinken lagern, wobei die Seitenelemente miteinander verbunden sind.)

2. Gestell nach Anspruch 1, dadurch gekennzeichnet, daß die Seitenelemente des Käfigs aus Kunststoff sind, bevorzugt aus teilkristallilnen Kunststoffen.

3. Gestein nach Anspruch 1, dadurch gekennzeichnet, daß die Seitenelemente des Käfigs aus beliebigem, geeignetem Material wie Stahl, Alu uws. sind.

4. Gestein nach Anspruch 1 und 2 , dadurch gekennzeichnet, daß die Verbindungen der Seitenelemente gleichzeitig Anschläge für die Klinke sind.
